# FASCICULE DE BREVET EUROPEEN

(11) **EP 4 250 962 B1**
(45) Date de publication et mention de la délivrance du brevet: **20.05.2026**
(21) Numéro de dépôt: 21789732.1
(22) Date de dépôt: 08.10.2021
(51) Int. Cl.: A23N 1/00, A47J 19/02, B30B 9/22

(54) **PRESSE-AGRUMES À MEMBRANE GONFLABLE COMPORTANT UNE CANULE MOBILE**
ZITRUSPRESSE MIT AUFBLASBARER MEMBRAN MIT BEWEGLICHER KANÜLE
CITRUS PRESS HAVING AN INFLATABLE MEMBRANE COMPRISING A MOVABLE CANNULA

(30) Priorité: 24.11.2020 FR 2012058
(43) Date de publication de la demande: 04.10.2023
(73) Titulaire: JNIUS, 59280 Armentières (FR)
(72) Inventeur: TOUBEAUX, Jean François, 59280 ARMENTIERES (FR); VERLEYEN, Michaël P.M., 4000 LIEGE (BE); THIRION, Franck, 59310 COUTICHES (FR)
(74) Mandataire: Cabinet Beau de Loménie
(86) Numéro de dépôt international: PCT/EP2021/077861
(87) Numéro de publication internationale: WO 2022/111899

(56) Documents cités:
- WO-A2-2017/158278
- US-A- 2 848 939
- US-A- 5 075 122

## Description

### Domaine Technique

La présente invention a pour objet un presse-agrumes. Elle trouve en particulier une application pour la préparation de jus, à partir d'agrumes, par exemple dans un espace de restauration ou dans un cadre privé.

### Technique Antérieure

On connaît des presse-agrumes manuels comportant une portion tronconique contre laquelle une portion de fruit peut être pressée, pour en extraire le jus.

De tels dispositifs nécessitent cependant des efforts importants de la part de l'utilisateur, et sont en outre salissants, du fait, en particulier, des projections de jus ; de ce fait, leur utilisation requiert également beaucoup de temps de la part de l'utilisateur, tant pour les opérations préalables à leur utilisation, telles que la découpe des fruits, que pour les opérations postérieures, telles que le nettoyage du dispositif et de l'environnement sur lequel il a été utilisé.

On connaît également des presse-agrumes partiellement automatiques, permettant de limiter les efforts requis de la part de l'utilisateur.

On connait notamment des presse-agrumes à membrane, tel que celui décrit dans le document WO2017158278. Un tel presse-agrume comprend :
- un châssis ;
- une enceinte disposée dans le châssis et ayant une paroi délimitant une cavité pour recevoir un fruit à presser contenant un fluide, l'enceinte ayant un axe et une ouverture supérieure pour l'introduction du fruit à presser dans la cavité;
- une membrane extensible disposée dans la cavité et s'étendant sur tout ou partie de la paroi de manière à entourer le fruit à presser lorsqu'il est dans l'enceinte,
- une canule munie d'au moins une perforation, la canule s'étendant parallèlement à l'axe de l'enceinte et étant configurée pour être engagée dans le fruit à presser, la canule comportant une conduite interne reliant la perforation à un orifice de sortie disposée en dessous de la cavité pour l'évacuation du fluide hors de la canule ;
- un dispositif de gonflage configuré pour gonfler la membrane extensible, en sorte de comprimer le fruit à presser emmanché sur la canule pour en extraire le fluide.

Dans la machine connue, la canule est fixe par rapport à l'enceinte. En conséquence, lorsque le fruit à presser est introduit dans l'enceinte, il est transpercé par la canule. Puis la membrane est gonflée pour presser le fruit. Le jus s'écoule hors de l'enceinte via la conduite interne. Après pressage, la membrane est dégonflée et le fruit pressé est ensuite évacué hors de l'enceinte par son ouverture supérieure grâce au déplacement vers le haut d'un plateau mobile. Puis, un bras pousse le fruit pressé vers un réceptacle disposé derrière l'enceinte.

Si cette machine donne toute satisfaction pour une utilisation domestique, la durée du cycle peut ne pas être suffisamment courte pour une utilisation dans un espace de restauration collectif, par exemple une salle de petit-déjeuner d'un hôtel ou un bar, ou bien encore tout lieu de restauration. Les documents US2848939 et US5075122 divulguent des presse-agrumes à canules munies d'enceintes cylindriques comprenant chacune une demi-coque supérieure qui est retirée pour évacuer le fruit pressé par le haut.

### Exposé de l'invention

Un but de la présente invention est d'offrir un presse-agrumes remédiant aux inconvénients précités.

L'invention atteint son but par le fait que le presse-agrumes comporte en outre un dispositif de déplacement pour déplacer en translation la canule par rapport à l'enceinte selon une première direction de déplacement parallèle à l'axe, entre une position active dans laquelle la canule s'étend au moins en partie dans l'enceinte pour emmancher le fruit à presser et une position de dégagement dans laquelle la canule est disposée en dessous de l'enceinte pour permettre le dégagement du fruit pressé hors de l'enceinte par une ouverture inférieure de l'enceinte.

L'évacuation hors de l'enceinte est réalisée simplement et rapidement en dégonflant la membrane, le fruit pressé sortant alors de l'enceinte sous l'action de la gravité. On comprend que la canule est déplacée en position de dégagement alors que la membrane est encore gonflée de façon que la canule n'entraine pas avec elle le fruit pressé lors de sa translation vers la position basse de dégagement.

Grâce à l'invention, l'évacuation du fruit pressé est plus rapide que dans l'art antérieur dès lors qu'il ne nécessite pas de pousser le fruit pressé vers le réceptacle. En outre, l'évacuation du fruit pressé par l'ouverture inférieure de l'enceinte permet avantageusement de disposer un grand réceptacle à déchets sous la machine, le fruit pressé sortant de l'enceinte et tombant dans le réceptacle grâce à l'action de la gravité.

En variante, le fruit peut être reçu dans l'enceinte après avoir pré-gonflé la membrane. Cela permet de centrer le fruit par rapport à l'axe de l'enceinte. Ce centrage permet de corriger la position du fruit par rapport à la canule, grâce à quoi la canule emmanche le fruit en son centre, optimisant ainsi l'extraction du jus. Ce permet également de réduire le temps de cycle dès lors que le fruit est correctement placé dès son entrée dans l'enceinte.

Le dispositif de déplacement comporte préférentiellement un actionneur motorisé, par exemple un vérin électrique ou pneumatique, ou tout autre actionneur permettant le déplacement en translation de la canule.

De préférence, mais non exclusivement, la membrane est réalisée dans un matériau élastomère, de préférence en silicone ou en EPDM.

Avantageusement, le presse-agrume comprend en outre un couvercle configuré pour obturer l'ouverture supérieure, le couvercle étant mobile par rapport à l'enceinte entre une position ouverte permettant l'entrée du fruit à presser dans l'enceinte via l'ouverture supérieure, et une position fermée dans laquelle l'ouverture supérieure est obturée par le couvercle.

On comprend que le couvercle est en position fermée lors de l'étape d'extraction. Le presse-agrume comporte avantageusement un actionneur motorisé, tel un vérin ou un moteur, pour faire passer le couvercle entre sa position ouverte et sa position fermée.

De préférence, le couvercle est monté pivotant par rapport à l'enceinte autour d'un premier axe de pivotement qui est orthogonal à l'axe de l'enceinte. De préférence, le premier axe de pivotement est disposé à une hauteur supérieure à celle de l'ouverture supérieure de l'enceinte. Le premier axe de pivotement est sensiblement perpendiculaire à la direction d'engagement du fruit frais dans le châssis.

Avantageusement, le presse-agrumes comprend en outre une paroi de fond configurée pour obturer l'ouverture inférieure de l'enceinte, la paroi de fond étant mobile par rapport à l'enceinte selon une deuxième direction de déplacement parallèle à l'axe de l'enceinte, entre une position d'obturation dans laquelle la paroi de fond obture au moins une partie de l'ouverture inférieure, et une position basse.

On comprend que la paroi de fond est en position d'obturation pendant l'étape d'extraction de jus, tandis qu'elle est en position basse lors de l'évacuation du fruit pressé hors de l'enceinte.

Aussi, lors de l'étape d'extraction du jus, l'enceinte est fermée par le couvercle d'une part, et par la paroi de fond d'autre part.

Le presse-agrume comporte préférentiellement un actionneur motorisé, tel un vérin ou une crémaillère, pour déplacer la paroi de fond par rapport à l'enceinte. Le mouvement de déplacement de la paroi de fond par rapport à l'enceinte est une translation selon la deuxième direction de déplacement.

La distance de déplacement de la paroi de fond par rapport à l'enceinte est configurée pour libérer suffisamment de place pour permettre la sortie du fruit pressé hors de l'enceinte.

Selon un aspect avantageux de l'invention, la paroi de fond est solidaire de la canule.

On comprend donc que la paroi de fond et la canule se déplacent en translation ensemble d'un seul bloc. Aussi, le dispositif de déplacement de la canule permet également le déplacement en translation de la paroi de fond. La canule s'étend perpendiculairement par rapport à la paroi de fond. Préférentiellement, la canule s'étend au travers de la paroi de fond. La portion de la canule qui comprend la perforation s'étend au-dessus de la paroi de fond.

Avantageusement, la paroi de fond est en position d'obturation lorsque la canule est en position active. Autrement dit, la position d'obturation de la paroi de fond correspond à la position active de la canule.

De préférence, la canule présente une portion s'étendant en dessous de la paroi de fond. Cette portion constitue de préférence la partie d'extrémité inférieure de la conduite interne par laquelle s'écoule le jus. Ladite portion inclut donc l'orifice de sortie du jus.

En variante, la canule et la paroi de fond peuvent constituer une seule pièce.

On comprend que lorsque la paroi de fond est en position obturée, le jus s'écoule au travers de la paroi via ladite portion.

Avantageusement, le presse-agrumes comprend en outre une gouttière pour évacuer le jus pressé sortant de la canule, la gouttière étant pivotante par rapport au châssis autour d'un axe de pivot entre une position d'écoulement dans laquelle la gouttière est située en dessous de l'orifice de sortie de la canule pour recevoir le fluide, et une position escamotée.

La gouttière a pour fonction de recevoir le jus sortant de l'orifice de sortie pour l'amener vers l'extérieur du châssis, où il est récupéré par l'utilisateur. La gouttière est donc disposée en dessous de l'enceinte. De préférence, la gouttière communique avec un bec verseur monté en façade du châssis.

Lorsque la canule est en position active, la gouttière est en position d'écoulement, de façon à guider le jus hors du châssis du presse-agrumes.

Lorsque la canule est en position de dégagement, la gouttière est en position escamotée.

On comprend que, en position d'écoulement, la gouttière est inclinée par rapport à l'horizontale, de préférence d'un angle compris entre cinq et quinze degrés, encore de préférence compris entre cinq et dix degrés.

L'axe de pivot est préférentiellement orthogonal à l'axe de l'enceinte. L'axe de pivot est situé entre la canule et une seconde extrémité de la gouttière opposée à une première extrémité destinée à être en regard de l'orifice de sortie lorsque la gouttière est en position d'écoulement.

De préférence, la paroi de fond coopère avec la gouttière de façon que le déplacement de la paroi de fond vers la position d'obturation provoque le basculement de la gouttière en position d'écoulement.

Pour ce faire, la gouttière comporte préférentiellement un doigt d'actionnement, en saillie par rapport au plan de la gouttière, qui coopère avec un bord périphérique de la paroi de fond. Lors de son déplacement vers la position d'obturation, la paroi de fond pousse le doigt d'actionnement, ce qui provoque la rotation de la gouttière.

Le déplacement de la paroi de fond vers la position basse a pour effet de permettre le basculement de la gouttière vers sa position escamotée grâce à l'action de la gravité.

Dans la variante où la canule est solidaire de la paroi de fond, le déplacement de la canule de la position active vers la position de dégagement a pour effet que la paroi de fond et/ou la canule exercent une poussée sur la gouttière dirigée vers le bas, ce qui provoque son pivotement vers sa position escamotée. On comprend que, en position escamotée, la gouttière est de préférence sensiblement verticale.

Avantageusement, le presse-agrumes comprend en outre un toboggan qui est mobile entre une position d'évacuation, dans laquelle il s'étend sous l'ouverture inférieure, de façon à guider l'évacuation du fruit pressé vers une ouverture de sortie ménagée en partie inférieure du châssis, et une position escamotée.

Le toboggan est en position escamotée lorsque la canule est en position active.

Le toboggan est en position d'évacuation lorsque la canule est en position de dégagement.

De préférence le toboggan est monté pivotant par rapport au châssis, atour d'un axe de pivot qui est orthogonal à l'axe de l'enceinte.

De préférence, l'axe de pivot du toboggan est parallèle à l'axe de pivot de la gouttière. Les axes de pivot du toboggan et de la gouttière sont disposés de part et d'autre de l'enceinte. Aussi, le toboggan et la gouttière sont disposés de part et d'autre de la paroi de fond, de façon à éviter toute collision lors de leurs pivotements respectifs.

En position escamotée, le toboggan s'étend sensiblement verticalement.

Avantageusement, la paroi de fond coopère avec le toboggan de sorte que le déplacement de la paroi de fond entre sa position d'obturation et sa position basse entraine le déplacement du toboggan entre sa position escamotée et sa position d'évacuation.

De préférence, la paroi de fond coopère également avec le toboggan, notamment lors du début de la phase de descente de la paroi de fond.

Un intérêt est que le déplacement du toboggan et/ou de la gouttière ne nécessitent pas de dispositifs de motorisation dédiés.

Avantageusement, le châssis comporte une porte qui est pivotante selon un axe de porte parallèle à l'axe de l'enceinte. Cette porte permet à un utilisateur d'avoir accès à l'intérieur du presse-agrumes, notamment pour réaliser les opérations de nettoyage ou de maintenance.

De préférence, la gouttière est montée à la porte de façon pivotante autour d'un axe de rotation orthogonal à l'axe de porte. La gouttière est montée à la porte de façon amovible, ce qui facilite le démontage de la gouttière pour procéder à son nettoyage. Il suffit à l'utilisateur d'ouvrir la porte et de détacher la gouttière de la porte.

Avantageusement, le presse-agrumes comporte une entrée pour l'insertion d'un agrume, ainsi qu'une glissière reliant l'entrée à l'ouverture supérieure de l'enceinte. On comprend que le fruit frais est inséré dans la machine via l'entrée et glisse, grâce à la glissière, dans l'enceinte. L'entrée est préférentiellement disposée en façade du presse-agrumes.

L'invention porte également sur une installation qui comporte un presse-agrumes selon l'invention et un réceptacle à déchets disposé sous le presse-agrumes, le réceptacle communiquant avec l'ouverture inférieure de l'enceinte.

Le réceptacle est donc prévu pour récupérer les fruits pressés.

Comme évoqué ci-dessus, le réceptacle peut être de grande dimension dès lors qu'il est placé sous le presse-agrumes.

De préférence, l'ouverture de sortie du châssis communique avec le réceptacle à déchets.

Le réceptacle pourra par exemple être dissimulé sous une table sur laquelle sera posé le presse-agrumes, la table étant munie d'une découpe pour faire communiquer l'ouverture de sortie du châssis avec le réceptacle.

### Description des dessins

L'invention sera mieux comprise à la lecture de la description qui suit d'un mode de réalisation de l'invention donné à titre d'exemple non limitatif, en référence aux dessins annexés, sur lesquels :
[Fig. **1**] La figure **1** est une vue générale d'un exemple de réalisation du presse-agrumes selon l'invention ;
[Fig. **2**] La figure **2** est une vue de côté en coupe du presse-agrumes de la figure **2****,** illustrant l'insertion d'un fruit dans le presse-agrumes ;
[Fig. **3**] La figure **3** est une vue de détail de l'enceinte du presse-agrumes de la figure **2****,** la membrane étant partiellement gonflée pour centrer le fruit dans l'enceinte ;
[Fig. **4**] La figure **4** illustre la fermeture du couvercle de l'enceinte ;
[Fig. **5**] La figure **5** illustre l'étape de gonflage de la membrane et l'extraction du jus, l'enceinte étant fermée et la gouttière relevée;
[Fig. **6**] La figure **6** illustre l'étape de descente de la canule, l'ouverture du couvercle la mise en place du toboggan d'évacuation du fruit pressé ; et
[Fig. **7**] La figure **7** illustre l'étape d'évacuation du fruit pressé vers le réceptacle situé sous le presse-agrumes.

### Description détaillée

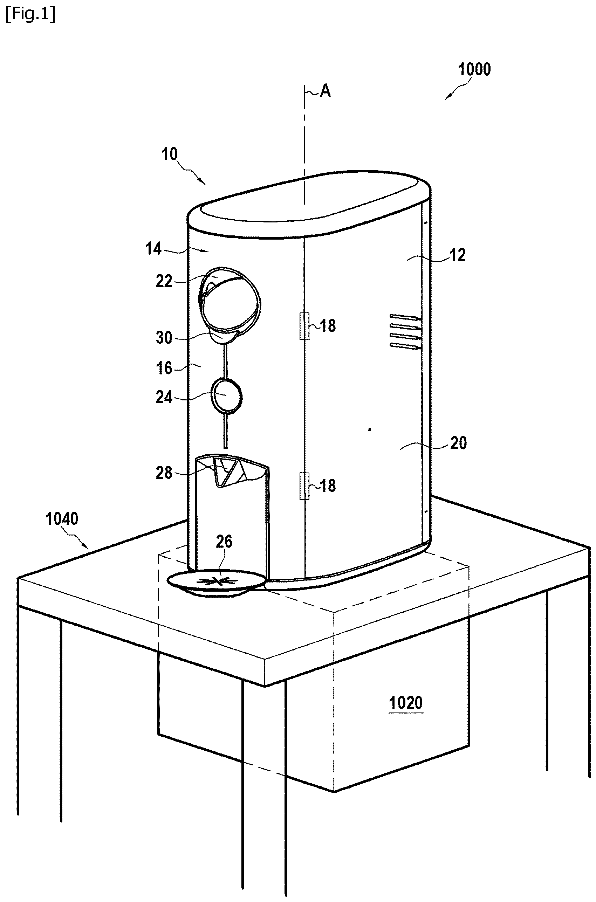

Sur la figure **1****,** on a illustré une installation **1000** pour le pressage d'agrumes, cette installation comportant un presse-agrumes **10,** qui sera décrit plus en détail ci-dessous, ainsi qu'un réceptacle à déchets **1020** qui est disposé sous le presse-agrumes **10.** Comme on le constate sur cette figure **1****,** le presse-agrumes **10** est posé sur une table **1040,** tandis que le réceptacle à déchets **1020** est disposé sous la table **1040.** La table **1040** peut être équipée de flasques latérales (non illustrées ici) permettant de cacher le réceptacle à déchets **1020.** Il s'agit ici d'un exemple non limitatif.

En variante, le presse-agrumes **10** pourrait être posé directement sur le réceptacle à déchets, ce dernier présentant par exemple un contour extérieur dans la continuité du presse-agrumes.

En référence à la figure **1****,** on constate que le presse-agrumes **10** comprend un châssis **12** se présentant sous la forme d'une boite ; le châssis **12** présente une partie avant ou façade **14** qui, dans cet exemple non limitatif, comprend une porte **16** montée pivotante par rapport à une paroi latérale **20** du châssis **12** selon un axe de porte **A,** grâce à des charnières **18.**

La porte **16** permet d'accéder facilement à l'intérieur du châssis, par exemple pour des opérations de nettoyage ou de maintenance.

Le presse-agrumes comporte en outre une entrée **22** pour l'insertion d'un fruit **1,** de préférence un agrume, dans le presse-agrumes, cette entrée étant ménagée dans la porte **16.**

Le presse-agrumes comporte en outre, en partie avant, un bouton d'actionnement **24,** pour la mise en route et l'arrêt du presse-agrumes.

Enfin, comme illustré en figure **1****,** le presse-agrumes comporte, en partie inférieure de la porte, un support **26** pour recevoir un verre **V,** et un bec verseur **28** par lequel s'écoule le jus extrait du fruit.

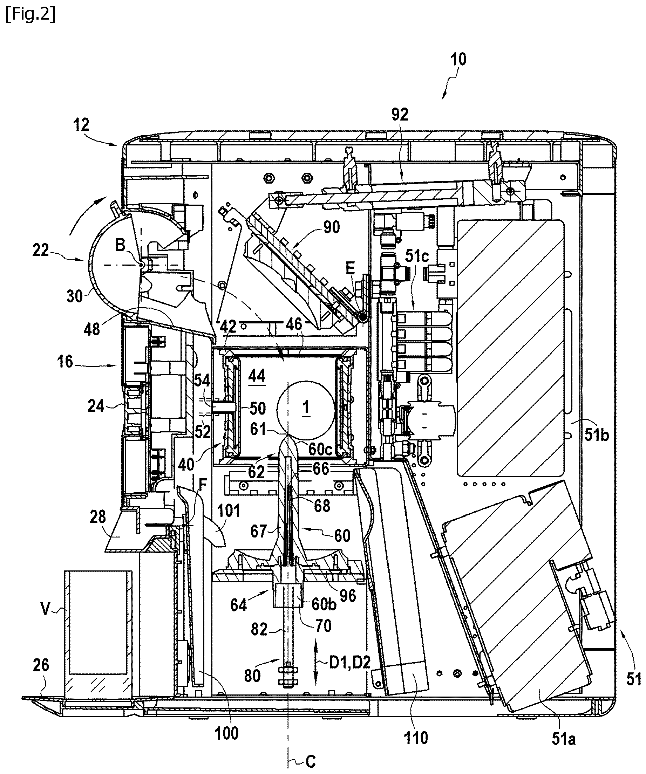

A l'aide des **figures 2 à 7**, on va maintenant décrire plus en détail le presse-agrumes **10** selon l'invention.

Le presse-agrumes **10** comporte une coupelle hémisphérique **30** qui est montée pivotante autour d'un axe **B,** perpendiculaire à l'axe de la porte **A,** cette coupelle **30** - en position de réception du fruit à presser - ayant pour fonction de recevoir le fruit à presser et, par rotation autour de l'axe **B,** de guider le fruit 1 dans le châssis et d'obturer l'entrée **22.**

Le presse-agrumes **10** comporte une enceinte **40** qui est disposée dans le châssis **12** et qui a une paroi **42** délimitant une cavité **44** pour recevoir le fruit à presser **1** contenant un jus.

L'enceinte présente ici une forme cylindrique ayant un axe **C** vertical.

L'enceinte comprend par ailleurs une ouverture supérieure **46** pour l'introduction du fruit à presser **1** dans la cavité **44.**

Pour permettre le guidage du fruit à presser **1** vers la cavité, le presse-agrumes comporte en outre une glissière **48** qui relie l'entrée **22** à l'ouverture supérieure **46** de l'enceinte **44.** Selon une variante, la coupelle hémisphérique **30** peut inclure la glissière **48,** de sorte que la glissière pivote avec la coupelle hémisphérique. Lorsque la coupelle est en position de réception, la glissière obture l'entrée **22** de la machine. Un intérêt est d'empêcher l'introduction de corps étrangers dans la machine par l'ouverture **22** lorsque la coupelle est en position de réception.

Le presse-agrumes comporte en outre une membrane **50** qui est extensible et disposée dans la cavité. Dans cet exemple, la membrane **50** est réalisée en silicone ou en EPDM. La membrane **50** s'étend sur la partie périphérique de la paroi cylindrique de la cavité **44,** de manière à entourer le fruit à presser lorsqu'il est dans l'enceinte. On comprend donc qu'à l'état de repos, la membrane dégonflée présente une forme sensiblement cylindrique d'axe **C.**

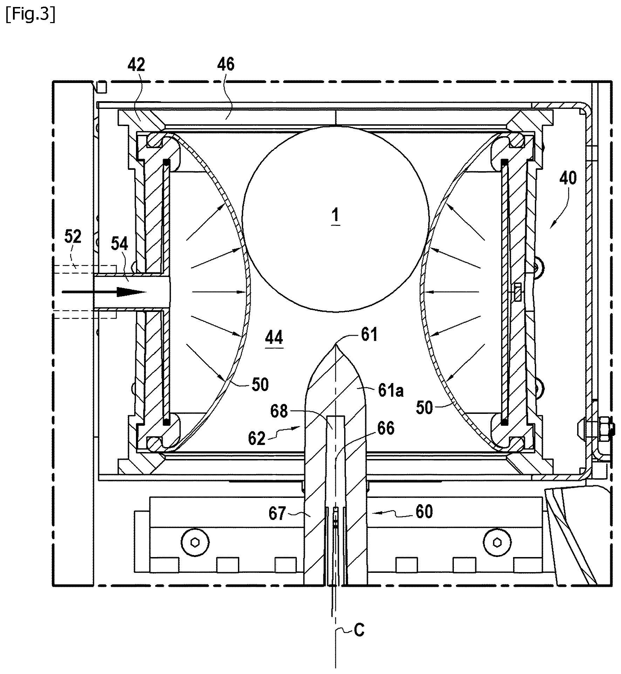

Le presse-agrumes comporte par ailleurs du dispositif de gonflage pneumatique **51** comprenant un mini-compresseur **51a** relié à un réservoir à air-comprimé **51b.** Le dispositif de gonflage est disposé dans le châssis et est relié à l'enceinte **40** via un tuyau **52.** Le dispositif de gonflage **51** est configuré pour gonfler la membrane extensible **50,** en sorte de comprimer le fruit à presser **1** emmanché sur la canule pour en extraire le fluide. De préférence, la pression de gonflage de la membrane est comprise entre trois et six bars. Comme illustré en figure **3****,** le tuyau **52** coopère dans cet exemple avec un raccord **54** qui traverse la paroi périphérique **42** de façon à déboucher entre la paroi et la membrane **50.** Le dispositif de gonflage **51** comprend en outre un distributeur pneumatique **51c** relié au réservoir **51b** et aux différents actionneurs du presse-agrumes.

On comprend que l'injection d'air comprimé entre la paroi et la membrane a pour effet de gonfler la membrane, ce qui provoque la réduction du volume de la cavité **44,** et donc le pressage du fruit et l'extraction du jus, comme cela sera expliqué ci-dessous.

Le presse-agrumes **10** comporte par ailleurs une canule **60** qui présente une forme longiligne cylindrique, une extrémité **62** en forme de pointe et une partie d'extrémité inférieure opposée à l'extrémité supérieure **62.** La canule **60** comporte des perforations **66** ménagées sur sa paroi périphérique cylindrique. Dans cet exemple non limitatif, les perforations sont longitudinales. Elles pourraient présenter une autre forme sans sortir du cadre de la présente invention. La canule s'étend parallèlement à l'axe **C** de l'enceinte **44** et, dans cet exemple, la canule présente un axe qui est coaxial à l'axe **C** de l'enceinte.

La canule **60** comporte par ailleurs une conduite interne **68** qui est reliée aux perforations **66** d'une part, et à un orifice de sortie **70** d'autre part ; cet orifice de sortie **70** étant disposé en dessous de la cavité **44** pour l'évacuation du fluide hors de la canule **60.** On comprend que la canule **60** est conformée pour pénétrer dans l'agrume et recueillir le jus du fruit.

Conformément à l'invention, le presse-agrumes **10** comporte en outre un dispositif de déplacement **80** pour déplacer en translation la canule **60** par rapport à l'enceinte **40** selon une première direction de déplacement **D1** qui est parallèle à l'axe **C** de l'enceinte **40.** Dans cet exemple, le dispositif de déplacement **80** est constitué par un vérin **82,** de préférence un vérin pneumatique. En variante, on pourrait utiliser un vérin électrique ou bien une crémaillère motorisée.

Dans cet exemple, la première direction de déplacement **D1** est verticale.

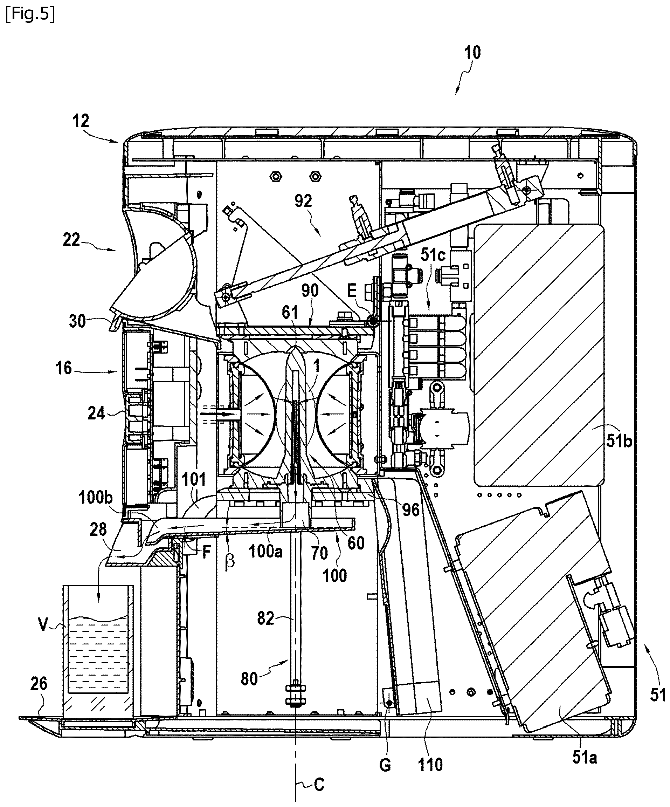

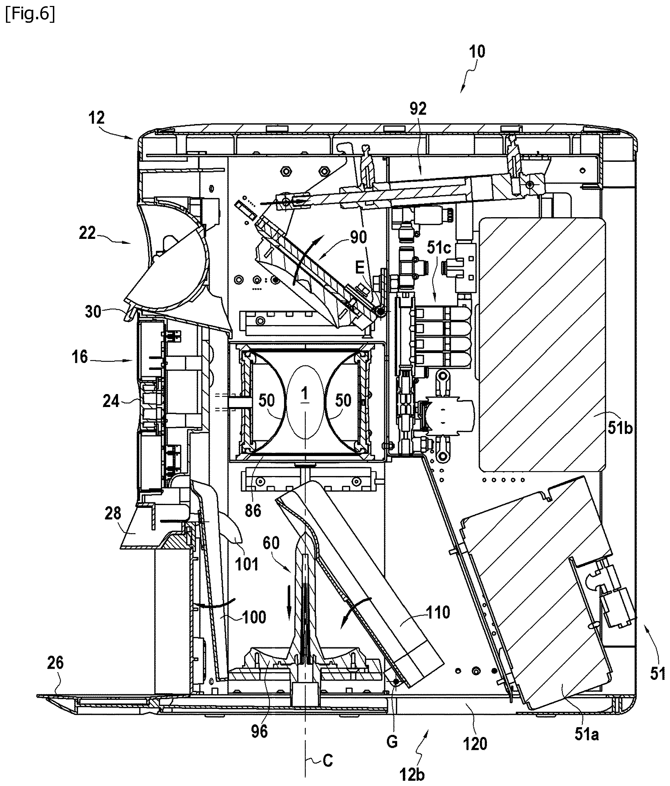

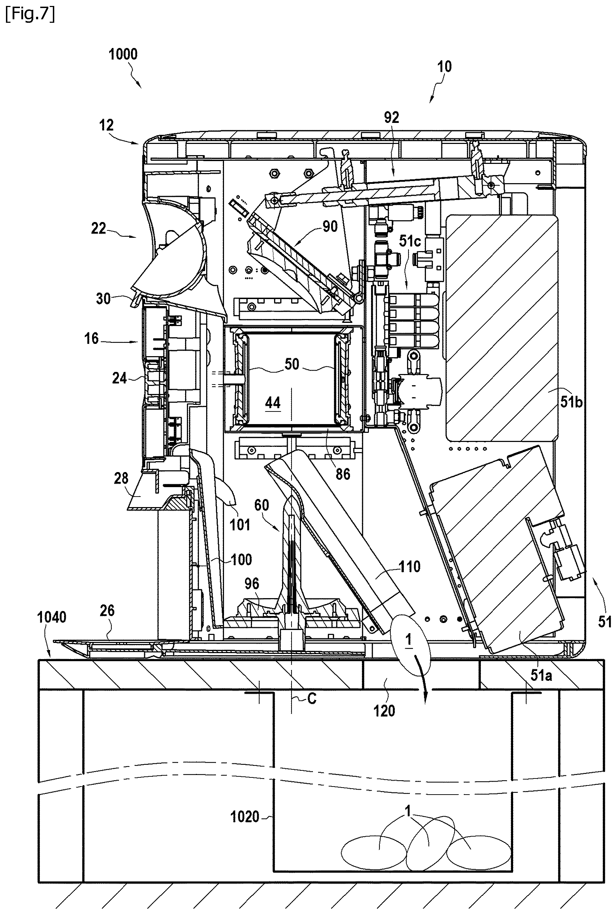

Le dispositif de déplacement **80** est configuré pour déplacer la canule en translation entre :
- une position active, illustrée en figure **5** dans laquelle la canule s'étend au moins en partie dans l'enceinte pour emmancher le fruit à presser **1,** et :
- une position de dégagement, illustrée notamment en figures **6** et **7** dans laquelle la canule est disposée en dessous de l'enceinte pour permettre le dégagement du fruit pressé hors de l'enceinte par une ouverture inférieure **86** de l'enceinte **40.**

Comme on le constate à l'aide des **figures 2 à 5**, la canule présente également une position intermédiaire, entre la position active et la position de dégagement, dans laquelle seule la partie supérieure **60a** de la canule **60** s'étend dans la cavité **44.** Plus exactement, dans cet exemple, le sommet **61** de la canule **60** se trouve en position intermédiaire, sensiblement au milieu de la cavité **44.**

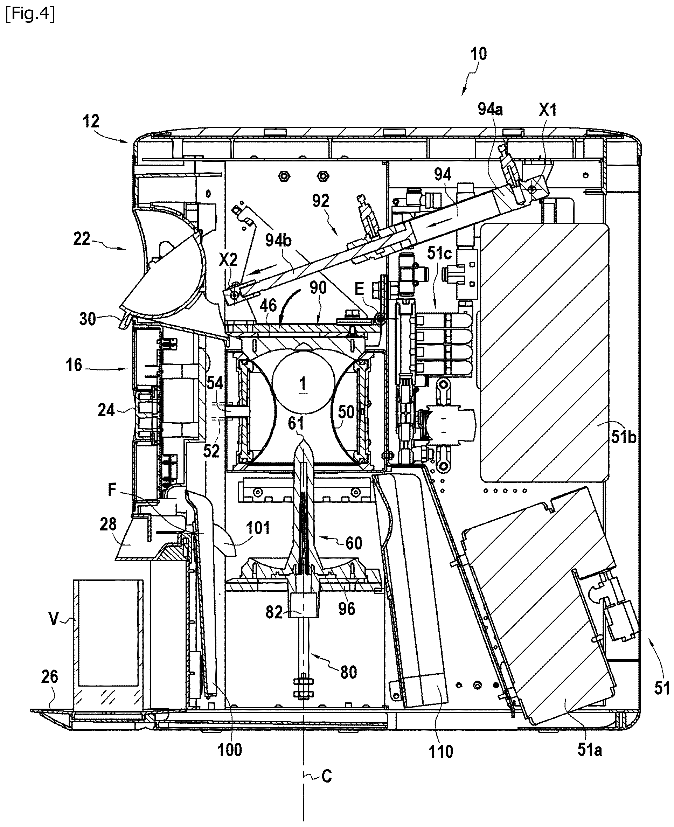

Le presse-agrumes comprend en outre un couvercle **90** qui est configuré pour obturer l'ouverture supérieure **46.** Dans cet exemple, le couvercle est monté mobile de façon pivotante par rapport à l'enceinte **40** autour d'un axe de rotation **E** qui est perpendiculaire à l'axe de l'enceinte **C.** Le couvercle **90** est mobile par rapport à l'enceinte **40** entre une position ouverte - illustrée notamment en figure **2** - permettant l'entrée du fruit à presser **1** dans l'enceinte via l'ouverture supérieure **46,** et une position fermée - illustrée notamment en figures **4** et **5** - dans laquelle l'ouverture supérieure **46** est obturée par le couvercle **90.**

Le presse-agrumes comporte un dispositif d'actionnement de couvercle **92,** en l'espèce un vérin pneumatique **94** qui présente un corps 9**4a** monté pivotant par rapport au châssis autour d'un axe **X1.** Le vérin **94** comprend une tige **94**b qui est montée pivotante par rapport au couvercle **90** autour d'un axe de pivotement **X2** opposé au premier axe de pivotement **E** du couvercle.

On comprend que l'actionnement du vérin **94** a pour effet de faire pivoter le couvercle **90** autour du premier axe de pivotement **E.**

Le presse-agrumes **10** comprend en outre une paroi de fond **96** qui est configurée pour obturer l'ouverture inférieure **86** de l'enceinte **40.** Dans cet exemple, la canule est fixée perpendiculairement à la paroi de fond **96.** Plus précisément, la canule **60** traverse la paroi de fond **96.**

La paroi de fond est mobile en translation par rapport à l'enceinte **40** selon une deuxième direction de déplacement **D2** qui dans cet exemple est parallèle à la première direction de déplacement **D1.** Les première et deuxième directions de déplacement **D1, D2** sont parallèles à l'axe **C** de l'enceinte. Ce déplacement se fait entre une position d'obturation - illustrée en figure **5** - dans laquelle la paroi de fond **96** obture l'ouverture inférieure **86,** et une position basse - illustrée en figure **6** - dans laquelle le fruit pressé **1** peut sortir de la cavité par l'ouverture inférieure **86.**

La paroi de fond présente également une position intermédiaire, illustrée en figures **2** et **4****.**

La canule **60** présente par ailleurs une portion **60**b qui s'étend en dessous de la paroi de fond **96.** Comme on le constate sur la figure **2****,** l'orifice de sortie **70** est ménagé dans cette portion **60**b.

En se référant à la figure **5****,** on constate que le presse-agrumes **10** comprend en outre une gouttière **100** pour évacuer le jus pressé sortant de la canule **60.** Cette gouttière est pivotante par rapport au châssis autour d'un axe de rotation **F** qui est orthogonal à l'axe **C** de l'enceinte entre une position d'écoulement - illustrée en figure **5** - dans laquelle la gouttière est située en dessous de l'orifice de sortie **70** de la canule **60** pour recevoir le fluide, et une position escamotée illustrée notamment en figure **2****.** En position escamotée, la gouttière **100** est sensiblement verticale, tandis qu'en position d'écoulement, la gouttière **100** présente une légère inclinaison par rapport à l'horizontal, d'un angle **β** de l'ordre de sept degrés environ, afin de faciliter l'écoulement du jus. Comme on le comprend à l'aide de la figure **5****,** la gouttière **100** présente une portion amont **100**a qui est disposée sous l'orifice de sortie **70** et une position aval **100**b, opposée à la position amont **100**a, qui est en communication avec le bec verseur **28.** Dans cet exemple, l'axe de rotation **F** est disposé à proximité de la position amont et la gouttière **100** est libre en rotation autour de l'axe de rotation **F,** de sorte que la gouttière tend à pivoter vers sa position escamotée sous l'action de la gravité.

Autrement dit, le jus extrait sort de la canule par l'orifice de sortie **70,** s'écoule le long de la gouttière **100,** s'écoule dans le bec verseur **28** puis dans le verre **V.**

Comme on le constate sur la figure **4****,** la paroi de fond **96** coopère avec la gouttière **100** de façon que le déplacement de la paroi de fond vers sa position basse entraine la gouttière en position escamotée. En effet, la paroi de fond vient en contact de la gouttière et, par son mouvement descendant vers sa position basse, provoque le pivotement de la gouttière **100** vers sa position escamotée.

Le presse-agrumes comprend en outre un toboggan **110** - visible notamment en figure **6** - qui est mobile de façon pivotante entre une position d'évacuation, illustrée en figure **6****,** dans laquelle il s'étend sous l'ouverture inférieure **86** de l'enceinte, de façon à guider l'évacuation du fruit pressé **1** vers une ouverture de sortie **120** ménagée en partie inférieure **12**b du châssis **12.** Le toboggan **110** présente également une position escamotée, illustrée notamment en figure **5****.** Le toboggan est donc monté pivotant autour d'un axe de rotation **G,** qui est orthogonal à l'axe de l'enceinte **C.**

La paroi de fond **96** coopère avec le toboggan **110** de sorte que le déplacement de la paroi de fond entre sa position d'obturation et sa position basse entraine le déplacement du toboggan entre sa position escamotée et sa position d'évacuation. On comprend de ce qui précède que, selon l'invention, la gouttière et le toboggan sont pivotés grâce au déplacement de la canule et de la paroi de fond, sans recourir à des dispositifs motorisés dédiés.

En figure **7****,** on a illustré l'installation **1000,** cette figure illustrant le fait que le réceptacle à déchets **1020** communique avec l'ouverture inférieure **86** de l'enceinte, tandis que l'ouverture de sortie **120** du châssis communique avec le réceptacle à déchets **1020.**

Le principe de fonctionnement du presse-agrumes **10** décrit ci-dessus est le suivant. Après avoir allumé l'appareil et placé un verre **V** sous le bec verseur, l'utilisateur insère un fruit à presser **1** dans le presse-agrumes via la coupelle **30.** Le fruit **1** glisse sur la glissière et entre dans l'enceinte **40** via l'ouverture supérieure **46,** le couvercle **90** étant en position ouverte. Selon une variante préférentielle, la membrane **50** est pré-gonflée avant l'arrivée du fruit **1** de façon que ce dernier soit immédiatement centré dans la cavité, ce qui permet de diminuer le temps de cycle. Le couvercle **90** est ensuite amené en position fermée.

Concomitamment, la canule est déplacée en position active de façon à emmancher le fruit **1,** tandis que la paroi de fond **96** est amenée en position d'obturation pour obturer l'ouverture inférieure **86** de l'enceinte **40.** Comme la canule est solidaire de la paroi de fond, on comprend que la paroi de fond est en position d'obturation lorsque la canule est en position active. Dans le même temps, la gouttière **100** pivote dans sa position d'écoulement grâce au contact entre la paroi de fond **96** et un doigt d'actionnement **101** fixé à la gouttière. Lors de son déplacement vers la position d'obturation, la paroi de fond **96** pousse le doigt d'actionnement **101** vers le haut, ce qui provoque la rotation de la gouttière vers la position d'écoulement.

Dans le même mouvement, le toboggan **110** bascule en position escamotée sous l'action de la canule et de la paroi de fond.

La membrane **50** est ensuite gonflée pour écraser le fruit et en extraire le jus via les performations **60** et la conduite interne de la canule. Le jus s'écoule le long de la gouttière vers le bec verseur **28,** avant de s'écouler dans le verre **V.**

Après extraction du jus, le couvercle est amené en position ouverte, pendant que la canule **60** et la paroi de fond **96** sont amenées en position de dégagement, respectivement en position basse. Concomitamment, le toboggan bascule vers sa position d'évacuation et la membrane se dégonfle, libérant le fruit pressé **1** qui sort de l'enceinte sous l'action de la gravité et tombe dans le réceptacle **1020** en étant guidé par le toboggan **110.** Dans le même temps, la gouttière **100** bascule en position escamotée sous l'action de la gravité.

L'utilisateur suivant peut alors introduire un nouveau fruit dans le presse-agrumes.

## Revendications

1. Presse-agrumes (10) comprenant :
• un châssis (12) ;
• une enceinte (40) disposée dans le châssis (12) et ayant une paroi (42) délimitant une cavité (44) pour recevoir un fruit à presser (1) contenant un fluide, l'enceinte ayant un axe (C) et une ouverture supérieure (46) pour l'introduction du fruit à presser dans la cavité (44) ;
• une membrane extensible (50) disposée dans la cavité et s'étendant sur tout ou partie de la paroi (42) de manière à entourer le fruit à presser lorsqu'il est dans l'enceinte,
• une canule (60) munie d'au moins une perforation (66), la canule s'étendant parallèlement à l'axe (C) de l'enceinte (44) et étant configurée pour être engagée dans le fruit à presser, la canule comportant une conduite interne (68) reliant la perforation (66) à un orifice de sortie (70) disposé en dessous de la cavité pour l'évacuation du fluide hors de la canule (60) ;
• un dispositif de gonflage (51) configuré pour gonfler la membrane extensible (50), en sorte de comprimer le fruit à presser (1) emmanché sur la canule pour en extraire le fluide ;
le presse-agrumes étant **caractérisé en ce qu'**il comporte en outre un dispositif de déplacement (80) pour déplacer en translation la canule (60) par rapport à l'enceinte (40) selon une première direction de déplacement (D1) parallèle à l'axe (C), entre une position active dans laquelle la canule s'étend au moins en partie dans l'enceinte pour emmancher le fruit à presser (1) et une position de dégagement dans laquelle la canule est disposée en dessous de l'enceinte pour permettre le dégagement du fruit pressé hors de l'enceinte par une ouverture inférieure (86) de l'enceinte (40).

2. Presse-agrumes selon la revendication 1, comprenant en outre un couvercle (90) configuré pour obturer l'ouverture supérieure (46), le couvercle étant mobile par rapport à l'enceinte (40) entre une position ouverte permettant l'entrée du fruit à presser (1) dans l'enceinte via l'ouverture supérieure (46), et une position fermée dans laquelle l'ouverture supérieure (46) est obturée.

3. Presse-agrumes selon la revendication 2, dans laquelle le couvercle est monté pivotant par rapport à l'enceinte autour d'un premier axe de pivotement (E) qui est orthogonal à l'axe (C) de l'enceinte.

4. Presse-agrumes selon l'une quelconque des revendications précédentes, comprenant en outre une paroi de fond (96) configurée pour obturer l'ouverture inférieure (86) de l'enceinte, la paroi de fond étant mobile par rapport à l'enceinte selon une deuxième direction de déplacement (D2) parallèle à l'axe (C) de l'enceinte, entre une position d'obturation dans laquelle la paroi de fond (86) obture au moins une partie de l'ouverture inférieure (86), et une position basse.

5. Presse-agrumes selon la revendication 4, dans lequel la paroi de fond (96) est solidaire de la canule (60).

6. Presse-agrumes selon la revendication 5, dans lequel la canule (60) présente une portion (60a) s'étendant en dessous de la paroi de fond (96).

7. Presse-agrumes selon l'une quelconque des revendications 4 à 6, comprenant en outre une gouttière (100) pour évacuer le jus pressé sortant de la canule (60), la gouttière étant pivotante par rapport au châssis entre une position d'écoulement dans laquelle la gouttière est située en dessous de l'orifice de sortie (70) de la canule (60) pour recevoir le fluide, et une position escamotée.

8. Presse-agrumes selon la revendication 7, dans laquelle la paroi de fond (96) coopère avec la gouttière de façon que le déplacement de la paroi de fond vers la position d'obturation provoque le basculement de la gouttière en position d'écoulement.

9. Presse-agrumes selon l'une quelconque des revendications précédentes, comprenant en outre un toboggan (110) qui est mobile entre une position d'évacuation dans laquelle il s'étend sous l'ouverture inférieure, de façon à guider l'évacuation du fruit pressé vers une ouverture de sortie ménagée (120) en partie inférieure (12b) du châssis, et une position escamotée.

10. Presse-agrumes selon les revendications 4 et 9, dans lequel la paroi de fond coopère avec le toboggan (110) de sorte que le déplacement de la paroi de fond entre sa position d'obturation et sa position basse entraine le déplacement du toboggan entre sa position escamotée et sa position d'évacuation.

11. Presse-agrumes selon l'une quelconque des revendications précédentes, dans lequel le châssis (12) comporte une porte (16) qui est pivotante selon un axe de porte (A) parallèle à l'axe de l'enceinte.

12. Presse-agrumes selon les revendications 7 et 11, dans laquelle la gouttière est montée à la porte de façon pivotante autour d'un axe de rotation (F) orthogonal à l'axe de porte.

13. Presse-agrumes selon l'une quelconque des revendications précédentes, **caractérisé en ce qu'**il comporte une entrée (22) pour l'insertion d'un agrume, ainsi qu'une glissière (48) reliant l'entrée (22) à l'ouverture supérieure (46) de l'enceinte (44).

14. Installation (1000) comportant un presse-agrumes (10) selon l'une quelconque des revendications précédentes et un réceptacle à déchets (1020) disposé sous le presse-agrumes, le réceptacle à déchets (102) communiquant avec l'ouverture inférieure (86) de l'enceinte.

15. Installation selon la revendication précédente, en combinaison avec la revendication 9, dans laquelle l'ouverture de sortie (120) communique avec le réceptacle à déchets.

## Patentansprüche

1. Zitruspresse (10), umfassend:
• einen Rahmen (12);
• ein Gehäuse (40), das im Rahmen (12) angeordnet ist und eine Wand (42) aufweist, die einen Hohlraum (44) begrenzt, um eine zu pressende Frucht (1) aufzunehmen, die eine Flüssigkeit enthält, wobei das Gehäuse eine Achse (C) und eine obere Öffnung (46) aufweist, um die zu pressende Frucht in den Hohlraum (44) einzuführen;
• eine dehnbare Membran (50), die im Hohlraum angeordnet ist und sich auf der ganzen oder einem Teil der Wand (42) erstreckt, so dass sie die zu pressende Frucht umgibt, wenn sie sich im Hohlraum befindet;
• eine Kanüle (60), die mit mindestens einer Perforation (66) versehen ist, wobei sich die Kanüle parallel zur Achse (C) des Gehäuses (44) erstreckt und konfiguriert ist, um in die zu pressende Frucht einzugreifen, wobei die Kanüle einen internen Kanal (68) umfasst, der die Perforation (66) mit einer Auslassöffnung (70) verbindet, die unter dem Hohlraum angeordnet ist, um Flüssigkeit aus der Kanüle (60) abzuführen;
• eine Aufblasvorrichtung (51), die konfiguriert ist, um die dehnbare Membran (50) aufzublasen, um die zu pressende Frucht (1), die auf die Kanüle aufgesetzt ist, zu komprimieren, um die Flüssigkeit davon zu entnehmen;
wobei die Zitruspresse **dadurch gekennzeichnet ist, dass** sie außerdem eine Verschiebevorrichtung (80) umfasst, um die Kanüle (60) translatorisch mit Bezug auf das Gehäuse (40) entlang einer ersten Verschiebungsrichtung (D1) parallel zur Achse (C) zwischen einer aktiven Position, in der sich die Kanüle mindestens teilweise im Gehäuse erstreckt, um die zu pressende Frucht (1) aufzusetzen, und einer Freigabeposition zu verschieben, in der die Kanüle unter dem Gehäuse angeordnet ist, um die Freigabe der gepressten Frucht aus dem Gehäuse durch eine untere Öffnung (86) des Gehäuses (40) zu ermöglichen.

2. Zitruspresse nach Anspruch 1, umfassend außerdem einen Deckel (90), der konfiguriert ist, um die obere Öffnung (46) abzudichten, wobei der Deckel mit Bezug auf das Gehäuse (40) zwischen einer geöffneten Position, die den Eintritt der zu pressenden Frucht (1) in das Gehäuse durch die obere Öffnung (46) ermöglicht, und einer geschlossenen Position beweglich ist, in der die obere Öffnung (46) abgedichtet ist.

3. Zitruspresse nach Anspruch 2, wobei der Deckel mit Bezug auf das Gehäuse um eine erste Schwenkachse (E) schwenkbar montiert ist, die orthogonal zur Achse (C) des Gehäuses ist.

4. Zitruspresse nach einem der vorhergehenden Ansprüche, umfassend außerdem eine Bodenwand (96), die konfiguriert ist, um die untere Öffnung (86) des Gehäuses abzudichten, wobei die Bodenwand mit Bezug auf das Gehäuse entlang einer zweiten Verschiebungsrichtung (D2) parallel zur Achse (C) des Gehäuses zwischen einer Abdichtposition, in der die Bodenwand (86) mindestens einen Teil der unteren Öffnung (86) abdichtet, und einer unteren Position beweglich ist.

5. Zitruspresse nach Anspruch 4, wobei die Bodenwand (96) mit der Kanüle (60) einstückig ist.

6. Zitruspresse nach Anspruch 5, wobei die Kanüle (60) einen Abschnitt (60a) darstellt, der sich unter der Bodenwand (96) erstreckt.

7. Zitruspresse nach einem der Ansprüche 4 bis 6, umfassend außerdem eine Rinne (100), um den gepressten Saft, der aus der Kanüle (60) austritt, abzuführen, wobei die Rinne mit Bezug auf den Rahmen zwischen einer Abflussposition, in der sich die Rinne unter der Auslassöffnung (70) der Kanüle (60) befindet, um die Flüssigkeit aufzunehmen, und einer zurückgezogenen Position schwenkbar ist.

8. Zitruspresse nach Anspruch 7, wobei die Bodenwand (96) mit der Rinne zusammenarbeitet, so dass die Verschiebung der Bodenwand hin zur Abdichtposition das Kippen der Rinne in die Abflussposition hervorruft.

9. Zitruspresse nach einem der vorhergehenden Ansprüche, umfassend außerdem eine Rutsche (110), die zwischen einer Abführposition, in der sie sich unter der unteren Öffnung erstreckt, um das Abführen der gepressten Frucht hin zu einer Auslassöffnung (120), die im unteren Teil (12b) des Rahmens angeordnet ist, zu leiten, und einer zurückgezogenen Position beweglich ist.

10. Zitruspresse nach Anspruch 4 und 9, wobei die Bodenwand mit der Rutsche (110) zusammenarbeitet, so dass die Verschiebung der Bodenwand zwischen ihrer Abdichtposition und ihrer unteren Position die Verschiebung der Rutsche zwischen ihrer zurückgezogenen Position und ihrer Abführposition bewirkt.

11. Zitruspresse nach einem der vorhergehenden Ansprüche, wobei der Rahmen (12) eine Tür (16) umfasst, die entlang einer Türachse (A) parallel zur Achse des Gehäuses schwenkt.

12. Zitruspresse nach Anspruch 7 und 11, wobei die Rinne auf schwenkende Weise um eine Drehachse (F) orthogonal zur Türachse an der Tür montiert ist.

13. Zitruspresse nach einem der vorhergehenden Ansprüche, **dadurch gekennzeichnet, dass** sie einen Eintritt (22) zum Einführen einer Zitrusfrucht sowie einen Schieber (48) umfasst, der den Eintritt (22) mit der oberen Öffnung (46) des Gehäuses (44) verbindet.

14. Anlage (1000), umfassend eine Zitruspresse (10) nach einem der vorhergehenden Ansprüche, und einen Behälter für Abfall (1020), der unter der Zitruspresse angeordnet ist, wobei der Behälter für Abfall (102) mit der unteren Öffnung (86) des Gehäuses kommuniziert.

15. Anlage nach dem vorhergehenden Anspruch in Kombination mit Anspruch 9, wobei die Auslassöffnung (120) mit dem Behälter für Abfall kommuniziert.

## Claims

1. A citrus press (10) comprising:
• a frame (12);
• an enclosure (40) disposed in the frame (12) and having a wall (42) delimiting a cavity (44) for receiving a fruit to be squeezed (1) containing a fluid, the enclosure having an axis (C) and a upper opening (46) for the introduction of the fruit to be squeezed into the cavity (44);
• an extensible membrane (50) disposed in the cavity and extending over all or part of the wall (42) so as to surround the fruit to be squeezed when it is in the enclosure,
• a cannula (60) provided with at least one perforation (66), the cannula extending parallel to the axis (C) of the enclosure (44) and being configured to be engaged in the fruit to be squeezed, the cannula including an inner duct (68) connecting the perforation (66) to an outlet orifice (70) disposed below the cavity for the removal of the fluid from the cannula (60);
• an inflation device (51) configured to inflate the extensible membrane (50), so as to compress the fruit to be squeezed (1) fitted onto the cannula in order to extract the fluid therefrom;
the citrus press being **characterized in that** it further includes a displacement device (80) for moving the cannula (60) in translation relative to the enclosure (40) along a first direction of displacement (D1) parallel to the axis (C), between an active position in which the cannula extends at least partly into the enclosure to fit the fruit to be squeezed (1) and a release position in which the cannula is disposed below the enclosure to allow the release of the squeezed fruit out of the enclosure through a lower opening (86) of the enclosure (40).

2. The citrus press according to claim 1, further comprising a lid (90) configured to obturate the upper opening (46), the lid being movable relative to the enclosure (40) between an open position allowing the fruit to be squeezed (1) to enter the enclosure via the upper opening (46), and a closed position in which the upper opening (46) is obturated.

3. The citrus press according to claim 2, wherein the lid is pivotally mounted relative to the enclosure about a first pivot axis (E) which is orthogonal to the axis (C) of the enclosure.

4. The citrus press according to any one of the preceding claims, further comprising a bottom wall (96) configured to obturate the lower opening (86) of the enclosure, the bottom wall being movable relative to the enclosure along a second direction of displacement (D2) parallel to the axis (C) of the enclosure, between an obturation position in which the bottom wall (86) obturates at least part of the lower opening (86), and a low position.

5. The citrus press according to claim 4, wherein the bottom wall (96) is secured to the cannula (60).

6. The citrus press according to claim 5, wherein the cannula (60) has a portion (60a) extending below the bottom wall (96).

7. The citrus press according to any one of claims 4 to 6, further comprising a channel (100) to remove the squeezed juice leaving the cannula (60), the channel being pivotable relative to the frame between a flow position in which the channel is located below the outlet orifice (70) of the cannula (60) to receive the fluid, and a retracted position.

8. The citrus press according to claim 7, wherein the bottom wall (96) cooperates with the channel so that the displacement of the bottom wall towards the obturation position causes the tilting of the channel into the flow position.

9. The citrus press according to any one of the preceding claims, further comprising a slide (110) which is movable between a removal position, in which it extends under the lower opening, so as to guide the removal of the squeezed fruit towards an outlet opening (120) arranged in the lower part (12b) of the frame, and a retracted position.

10. The citrus press according to claims 4 and 9, wherein the bottom wall cooperates with the slide (110) so that the displacement of the bottom wall between its obturation position and its low position causes the displacement of the slide between its retracted position and its removal position.

11. The citrus press according to any one of the preceding claims, wherein the frame (12) includes a door (16) which is pivotable along a door axis (A) parallel to the axis of the enclosure.

12. The citrus press according to claims 7 and 11, wherein the channel is pivotally mounted to the door about an axis of rotation (F) orthogonal to the door axis.

13. The citrus press according to any one of the preceding claims, **characterized in that** it includes an inlet (22) for the insertion of a citrus fruit, as well as a rail (48) connecting the inlet (22) to the upper opening (46) of the enclosure (44).

14. An installation (1000) including a citrus press (10) according to any one of the preceding claims and a waste receptacle (1020) disposed under the citrus press, the waste receptacle (1020) communicating with the lower opening (86) of the enclosure.

15. The installation according to the preceding claim, in combination with claim 9, wherein the outlet opening (120) communicates with the waste receptacle.
